# EUROPÄISCHE PATENTSCHRIFT

(11) **EP 1 943 979 B1**
(45) Veröffentlichungstag und Bekanntmachung des Hinweises auf die Patenterteilung: **28.07.2010**
(21) Anmeldenummer: 07000590.5
(22) Anmeldetag: 12.01.2007
(51) Int. Cl.: A61C 8/00

(54) **Zahnmedizinisches Implantat**
Dental implant
Implant dentaire

(43) Veröffentlichungstag der Anmeldung: 16.07.2008
(73) Patentinhaber: ZL Microdent-Attachment GmbH & Co. KG, 58339 Breckerfeld (DE)
(72) Erfinder: Böschemeyer, Thomas, 58313 Herdecke (DE); Clostermann, Volkhard-Hagen, 58097 Hagen (DE); Dragotto, Nico, 44536 Lünen (DE); Graf, Hans-Ludwig, Prof. Dr. med. dent., 04451 Panitzsch (DE); Möllerfeld, Willibert, 58339 Breckerfeld (DE)
(74) Vertreter: Kötter, Ulrich

(56) Entgegenhaltungen:
- EP-A2- 1 444 964
- GB-A- 1 291 470
- US-A- 5 482 463
- US-A1- 2003 054 318

## Beschreibung

Die vorliegende Erfindung betrifft ein zahnmedizinisches Implantat nach dem Oberbegriff des Patentanspruchs 1 sowie einen Implantataufbau nach dem Oberbegriff des Patentanspruchs 5.

Der Einsatz zahnmedizinischer Implantate ist im Bereich der Prothetik fester Bestandteil der Zahnmedizin. Gattungsgemäße Implantate sind in den unterschiedlichsten Ausführungen bekannt (z.B. mit zylindrisch oder konisch ausgebildetem Anschlussstück) und werden entweder in künstliche in einen Kiefer eingebrachte Öffnungen eingeschraubt oder - sofern der Knochenkontaktbereich eines Implantats der Wurzelform eines extrahierten Zahnes nachgebildet wurde - in das so entstandene, leere Zahnfach eingesetzt. Für den nachfolgenden knöchernen Einheilprozess wird in das Implantat eine Einheilkappe eingeschraubt. Zum Ende des Einheilprozesses wird die Einheilkappe freigelegt und anschließend entfernt. Nachfolgend wird in das Implantat ein Gingivaformer eingeschraubt, welcher die Abheilung des Zahnfleisches beeinflusst. Nach vollständiger Abheilung des Zahnfleisches wird der Gingivaformer temporär entfernt und es wird ein Abformpfosten in das Implantat eingeschraubt, wonach ein Abdruck für die Zahntechnik erstellt wird, welche basierend hierauf den Endaufbau sowie die Zahnkrone fertigt. Nach Fertigstellung des Endaufbaus wird der Gingivaformer entfernt und der Endaufbau in das Implantat eingesetzt.

Nachteilig an den vorbekannten Implantaten ist, dass im Zuge der im Rahmen der Behandlung erforderlichen Einsatzwechsel erhebliche Belastungen sowohl auf den Kieferbereich, als auch auf das Implantat selbst, insbesondere auch das Implantatgewinde ausgeübt werden. Aus der EP-A-1 444 964 ist ein Implantat bekannt, das aus einer im Ober- oder Unterkiefer des Patienten verankerbaren Verankerungspartie mit selbsteinschneidendem Außengewinde und einem an der Verankerungspartie befestigbaren Einsatz besteht. Das selbsteinschneidende Außengewinde ermöglicht eine einfachere und schnellere Operation, allerdings weist die Verankerungspartie nur ein Innengewinde auf, sodass das Problem der Belastung des Implantatkörpers durch häufiges Ein- und Ausschrauben des Einsatzes nicht gelöst wurde.

Unter dem Begriff "Einsatz" wird vorliegend eine in ein Implantat einsetzbare Komponente verstanden. Einsätze sind insbesondere Einheilkappen, Gingivaformer und Abformpfosten sowie Abutments.

Hier will die Erfindung Abhilfe schaffen. Der Erfindung liegt die Aufgabe zu Grunde, ein zahnmedizinisches Implantat-zu schaffen, das eine für Kieferknochen und Implantat schonendere Behandlung ermöglichen. Gemäß der Erfindung wird diese Aufgabe durch die Merkmale des kennzeichnenden Teils des Patentanspruchs 1 gelöst.

Mit der Erfindung ist ein zahnmedizinisches Implantat geschaffen, das eine für Kieferknochen und Implantat schonendere Behandlung ermöglicht. Die beabstandet zueinander angeordneten wenigstens zwei Innengewinde ermöglichen die Nutzung eines separaten Gewindes (Opfergewinde) zum Einbringen bzw. Wechseln von Einheilkappe, Gingivaformer und Abformpfosten. Das wenigstens zweite, am tiefsten angeordnete Innengewinde (Endgewinde) dient der endgültigen Fixierung des Endaufbaus zur Aufnahme der Zahnkrone. Wurde das Opfergewinde durch die vorangehenden Wechsel der Einsätze in Mitleidenschaft gezogen, so wird die Haltbarkeit des Endaufbaus hierdurch nicht beeinträchtigt. Darüber hinaus dient das Opfergewinde als Ersatzgewinde für den Fall, dass das Endgewinde durch nachfolgende mechanische Beeinträchtigungen des Endaufbaus beschädigt wurde. In diesem Fall ist keine weitere langwierige und für den Patienten äußerst strapazierende Implantierung eines neuen Implantats erforderlich, es muss lediglich ein neuer Aufbau hergestellt werden, der in das Opfergewinde einschraubbar ist.

In Ausgestaltung der Erfindung weist das untere, dem Grund der Sackbohrung am nächsten angeordnete Innengewinde (Endgewinde) einen kleineren Innendurchmesser auf, als das wenigstens eine darüber angeordnete Innengewinde (Opfergewinde). Hierdurch ist eine unabhängige Nutzung der beiden Innengewinde ermöglicht.

In Weiterbildung der Erfindung ist an dem Anschlussstück außen umlaufend ein Anschlusskonus angeformt. Der an dem Anschlussstück außen umlaufend angeformte Anschlusskonus bewirkt eine Umlenkung der von außen durch die Einsätze auf das Implantat einwirkenden Kräften zur Implantatachse hin. Hierdurch wird der umliegende Kieferknochen entlastet. Darüber hinaus ermöglicht der umlaufende Anschlusskonus eine deutlich bessere Abdichtung zwischen eingeschraubtem Einsatz und Anschlussstück.

In Weiterbildung der Erfindung weist das Anschlussstück außen wenigstens eine umlaufende Nut auf. Es hat sich gezeigt, dass derartige Nuten eine Rückbildung des Kieferknochens vermeiden (sog. Platform-Switching). Vorteilhaft sind mehrere derartige umlaufende Nuten vorgesehen.

Die Aufgabe wird weiterhin gelöst durch einen Implantataufbau, bestehend aus einem Implantat und einem Einsatz gemäß den Merkmalen des Patentanspruchs 5. Nach bestimmungsgemäßem Einschrauben des Einsatzes in das Implantat wird der Innenkonus des Einsatzes auf den Außenkonus des Implantats gepresst, wobei die Außenwände des Innenkonus federnd nach außen gedrückt werden, wodurch ein Presssitz erzielt wird, der gleichzeitig eine gute Abdichtung zwischen Innenkonus und Außenkonus bewirkt. Dem Eindringen von Bakterien in das Implantat wird hierdurch entgegengewirkt.

Die Aufgabe wird weiterhin gelöst durch einen Implantataufbau, bestehend aus einem Implantat gemäß den Merkmalen des Patentanspruchs 6. Nach bestimmungsgemäßem Einschrauben des Einsatzes in das Implantat ist im Übergangsbereich zwischen Einsatz Implantat eine umlaufende Kerbe erzielt, welche eine Verminderung des Knochenabbaus in diesem Bereich bewirkt (Platform-Switching). Eine vorteilhafte Kerbenform ist durch eine konische Ausbildung von Anschlussstück und Außenwand des Einsatzes im Übergangsbereich erzielbar.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

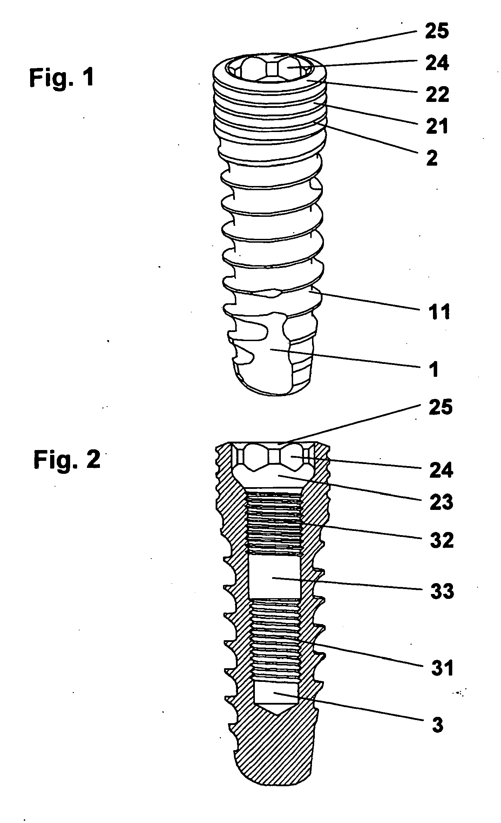

- Figur 1: die dreidimensionale Darstellung eines Implantats;
- Figur 2: das Implantat aus Figur 1 in Schnittdarstellung;

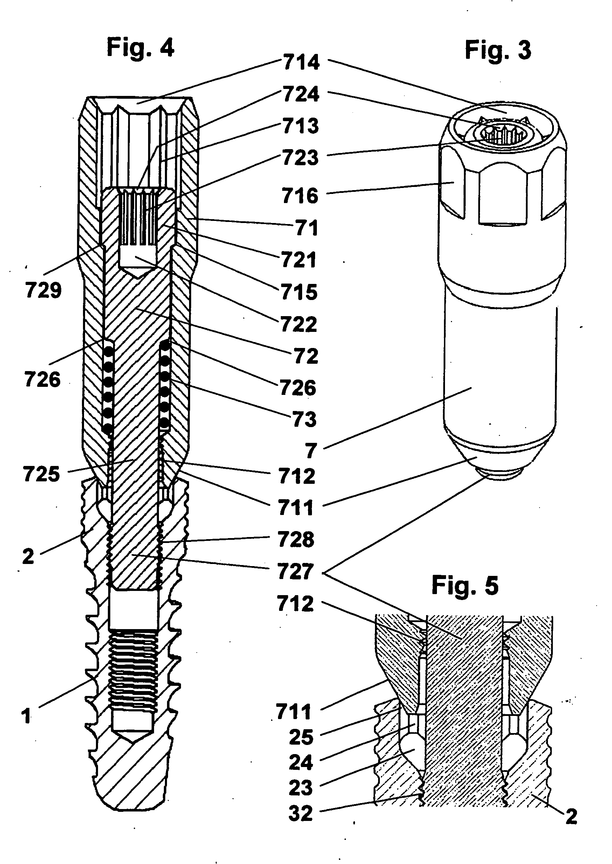

- Figur 3: die dreidimensionale Darstellung eines Insertionsaufsatzes, welcher nicht Teil der Erfindung ist;
- Figur 4: das Implantat aus Figur 1 mit eingeschraubtem Insertionsaufsatz aus Figur 3 in Schnittdarstellung;
- Figur 5: die Detailansicht der Kontaktstelle zwischen Insertionsaufsatz und Implantat aus Figur 4;

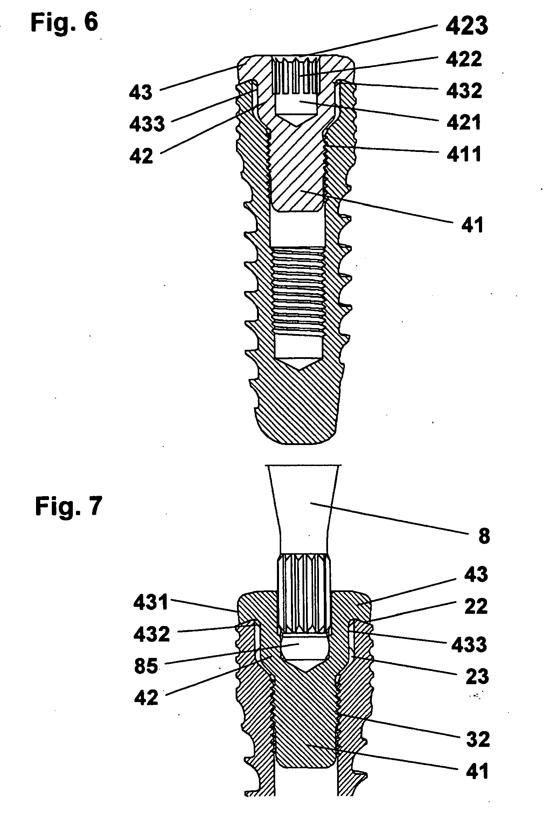

- Figur 6: das Implantat aus Figur 1 mit eingeschraubter Einheilkappe in Schnittdarstellung, wobei die Einheilkappe nicht Teil der Erfindung ist;
- Figur 7: die Einheilkappe aus Figur 6 mit eingeführtem Schraubwerkzeug;

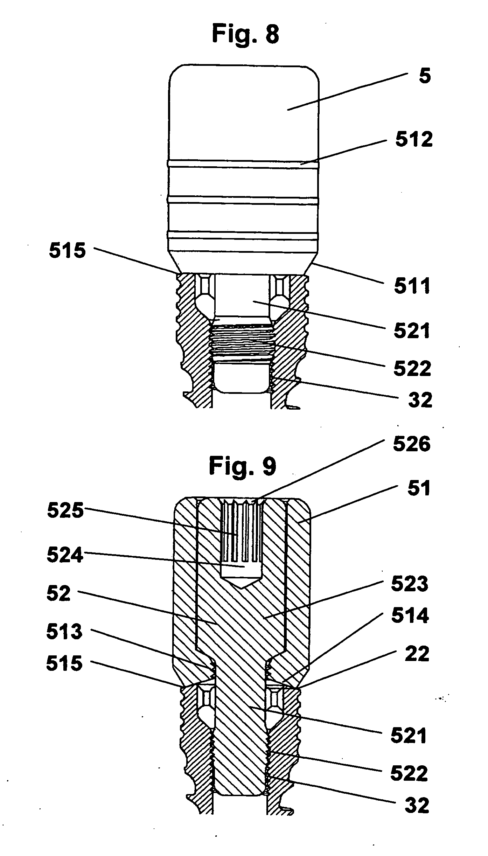

- Figur 8: die Seitenansicht eines in das Implantat aus Figur 1 eingeschraub- ten Gingivaformers in Teilschnittdarstellung;
- Figur 9: den Gingivaformer aus Figur 8 in Vollschnittdarstellung;

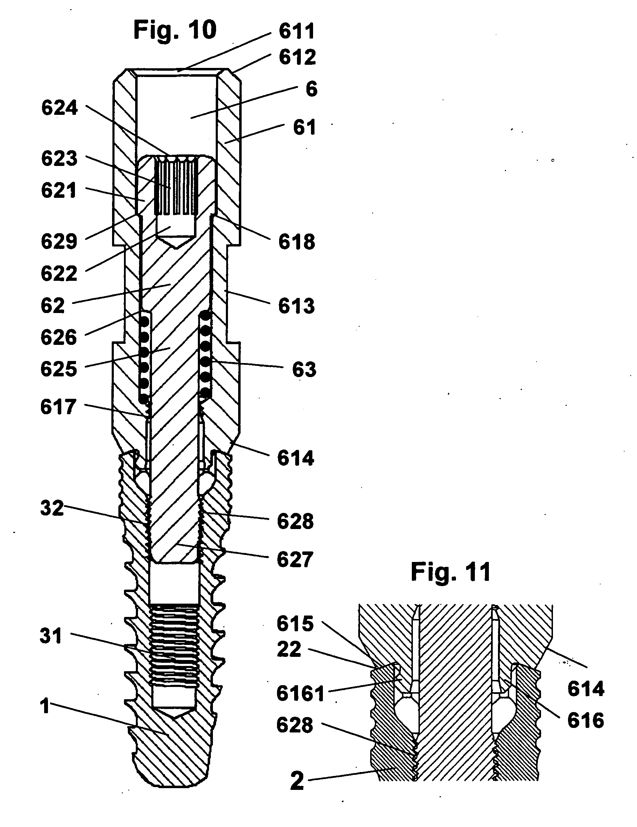

- Figur 10: das Implantat aus Figur 1 mit eingeschraubtem Abformpfosten in Schnittdarstellung;
- Figur 11: die Detailansicht der Kontaktstelle zwischen Implantat und Abform- pfosten aus Figur 10;
- Figur 12: den Abformpfosten aus Figur 10 in der Vorderansicht und
- Figur 13: die Darstellung des Abformpfostens aus Figur 12 in der Ansicht von unten.

Das als Ausführungsbeispiel gewählte Implantat ist aus Titan hergestellt und besteht im Wesentlichen aus einem Grundkörper 1 mit angeformtem Anschlussstück 2.

Der Grundkörper 1 ist außen umlaufend mit einem Außengewinde 11 versehen. In das angrenzende Anschlussstück 2 sind außen umlaufend parallel zueinander vier horizontale Nuten 21 eingebracht. Es hat sich gezeigt, dass das Vorsehen derartiger Nuten 21 eine deutliche Verminderung von Knochenrückgang bewirkt. Dieser Effekt wird als "Platform-Switching" bezeichnet. Weiterhin ist das Anschlussstück 2 im Ausführungsbeispiel außen umlaufend mit einer Zirkonoxidschicht versehen.

An seiner dem Grundkörper 1 gegenüberliegenden Oberseite ist in das Anschlussstück 2 ein nach außen abfallender Außenkonus 22 angeordnet. Entlang seiner Mittelachse ist in den Grundkörper 1 eine Sackbohrung 3 eingebracht, welche im Bereich des Anschlussstücks 2 in eine Aufnahme 23 übergeht. Die Aufnahme 23 ist im Wesentlichen topfförmig ausgebildet. An ihrer Seitenwand ist umlaufend in der Aufnahme 23 ein Innensechskant 24 angeformt. Die nach außen gerichtete Oberseite des Innensechskantprofils 24 ist derart angeschrägt, dass die Kontur eines Innenkonus 25 gebildet ist. Innerhalb der Sackbohrung 3 sind beabstandet zueinander zwei Innengewinde 31, 32 eingebracht. Dabei ist der Innendurchmesser des dem Grund der Sackbohrung 3 zugewandten Endgewindes 31 kleiner ausgeführt, als der Innendurchmesser des der Aufnahme 23 zugewandten Opfergewindes 32. Im Ausführungsbeispiel ist das Endgewinde 31 in der Größe M 1,6 x 0,2 und das Opfergewinde 32 in der Größe M 1,8 x 0,2 ausgebildet. Zwischen Endgewinde 31 und Opfergewinde 32 ist ein gewindeloses Zwischenstück 33 angeordnet.

Der als Ausführungsbeispiel gewählte Insertionsaufsatz 7 besteht im Wesentlichen aus einem Insertionsteil 71 und einer in diesem geführten Schraube 72, wobei zwischen Insertionsteil 71 und Schraube 72 eine Feder 73 angeordnet ist.

Das Insertionsteil 71 ist im Wesentlichen als Hohlzylinder ausgeführt. An seinem dem Implantat zugewandten Ende ist an das Insertionsteil 71 ein Außenkonus 711 angeformt. Oberhalb des Außenkonus 711 ist in dem Insertionsteil 71 innen umlaufend eine Gewindesicherung 712 angeordnet. An seiner dem Außenkonus 711 gegenüberliegenden Oberseite ist in das Insertionsteil 71 ein Innenvielkant 713 eingebracht, dessen nach außen gerichtete Oberseite als Innenkonus 714 ausgebildet ist. Unterhalb des Grundes des Innenvielkants 713 ist innerhalb des Insertionsteils 71 ein Anschlag 715 für den Kopf der Schraube 72 ausgebildet. Weiterhin ist das Insertionsteil 71 in Höhe des Innenvielkants 713 außen umlaufend mit einem Außenvielkant 716 versehen.

Die Schraube 72 weist einen Schraubenkopf 721 auf, in den mittig eine Sackbohrung 722 eingebracht ist. Die Innenwand der Sackbohrung 722 ist mit einem Innenvielkant 723 versehen. Die nach außen gerichtete Oberseite der Innenvielkant 723 ist als Innenkonus 724 abgeschrägt ausgebildet. An den Schraubenkopf 721 ist ein Zylinderstück 725 angeformt, dessen Außendurchmesser geringer ist, als der Außendurchmesser des Schraubenkopfes 721, sodass ein Absatz 726 gebildet ist. Weiterhin ist in Höhe des Innenvielkants 723 außen umlaufend ein Absatz 729 angeordnet. An seinem dem Absatz 726 gegenüberliegenden Ende ist an das Zylinderstück 725 ein Gewindezapfen 727 mit einem Außengewinde 728 angeformt.

Die Schraube 72 ist derart in dem Insertionsteil 71 geführt, dass der Schraubenkopf 721 in einer Endstellung mit dem Absatz 729 an dem Anschlag 715 des Insertionsteils 71 anliegt; in der anderen Endstellung liegt das Gewinde 728 des Gewindezapfens 727 an der Gewindesicherung 712 des Insertionsteils 71 an. Zwischen diesen Endstellungen ist die Schraube 72 in dem Insertionsteil 71 verschieblich gelagert. Zwischen dem Absatz 726 der Schraube 72 und der Gewindesicherung 712 des Insertionsteils 71 ist eine Schraubenfeder 73 angeordnet, durch welche das Zylinderstück 725 der Schraube 72 geführt ist.

Die als Ausführungsbeispiel gewählte Einheilkappe 4 ist im Wesentlichen in Art einer Schraube ausgebildet, mit einem Gewindezapfen 41, der ein Gewinde 411 aufweist, sowie einem Schraubenkopf 42, der mit einer Abdeckkappe 43 versehen ist. In dem Schraubenkopf 42 ist eine Sackbohrung 421 eingebracht, an dessen Innenwandung ein Innenvielkant 422 angeformt ist. Die nach außen gerichtete Oberseite des Innenvielkants 422 ist in Art eines Innenkonus 423 abgeschrägt ausgeführt. Der überstehende Rand 431 der Abdeckkappe 43 ist als Innenkonus 432 ausgebildet, an dessen Übergang zum Schraubenkopf 42 ein Freischnitt 433 eingebracht ist. Der überstehende Rand 431 ist außen nach unten hin konisch zulaufend ausgebildet und weist einen Außendurchmesser auf, der kleiner ist, als der Außendurchmesser des Außenkonus 22 des Implantats, sodass bei bestimmungsgemäßer Befestigung der Einheilkappe 4 in dem Implantat eine Kerbe 434 zwischen der Einheilkappe und dem Anschlussstück 2 des Implantats gebildet ist. Diese Kerbe 434 bewirkt eine Verminderung des Knochenrückgangs in diesem Bereich (Platform-Switching).

Der Innenkonus 432 der Abdeckkappe 43 ist weiterhin derart ausgebildet, dass er eine größere Steigung aufweist, als der Außenkonus 22 des Anschlussstücks 2 des Implantats, sodass nach bestimmungsgemäßen Einschrauben des Gewindezapfens 41 der Einhaltkappe 4 in das Opfergewinde 32 des Implantats die Außenwände des Randes 431 der Abdeckkappe 43 durch den Außenkonus 22 des Implantats federnd nach außen gedrückt werden. Hierdurch ist eine Abdichtung zwischen Innenkonus 432 und Außenkonus 22 bewirkt, wobei die Federwirkung durch den Freischnitt 433 unterstützt wird. Dem Eindringen von bakterienbeladenen Körperflüssigkeiten ist so entgegengewirkt.

Der als Ausführungsbeispiel gewählte Gingivaformer 5 besteht im Wesentlichen aus einem Formerteil 51, in dem eine Schraube 52 verschieblich gelagert ist. Das Formerteil 51 ist im Wesentlichen als tonnenförmiger Hohlzylinder ausgebildet. An seinem dem Implantat zugewandten Ende ist umlaufend ein Außenkonus 611 angeformt. Oberhalb des Außenkonus 511 sind an dem Formerteil 51 umlaufend Lasermarkierungen 512 eingebracht. In Höhe des Außenkonus 511 ist in dem Formerteil 51 innen umlaufend eine Gewindesicherung 513 angeformt. Unterhalb der Gewindesicherung 513 ist in das Formerteil 51 ein Innenkonus 514 eingeformt, der in den Außenkonus 511 des Formerteils 51 mündet und mit diesem umlaufend einen federnden Rand 515 bildet. Der umlaufende Rand 515 des Außenkonus 511 weist einen Außendurchmesser auf, der kleiner ist, als der Außendurchmesser des Außenkonus 22 des Implantats, sodass bei bestimmungsgemäßer Befestigung des Gingivaformers 5 in dem Implantat eine Kerbe 516 zwischen dem Gingivaformer und dem Anschlussstück 2 des Implantats gebildet ist. Diese Kerbe 516 bewirkt eine Verminderung des Knochenrückgangs in diesem Bereich (Platform-Switching).

Der Innenkonus 514 ist weiterhin derart ausgebildet, dass er eine größere Steigung aufweist, als der Außenkonus 22 des Implantats, sodass nach bestimmungsgemäßem Einschrauben des Gewindezapfens 521 der Schraube 52 in das Opfergewinde 32 des Implantats der Rand 515 durch den Außenkonus 22 des Implantats federnd nach außen gedrückt wird. Hierdurch wird eine Abdichtung zwischen Innenkonus 514 und Außenkonus 22 bewirkt.

Die Schraube 52 besteht Wesentlichen aus einem Gewindezapfen 521 mit einem Gewinde 522, der an einem Schraubenkopf 523 angeformt ist. In den Schraubenkopf 523 ist eine Sackbohrung 524 eingebracht, an deren Innenwand ein Innenvielkant 525 angeordnet ist. Die nach außen gerichtete Oberseite des Innenvielkants 525 ist als Innenkonus 526 abgeschrägt ausgebildet.

Der als Ausführungsbeispiel gewählte Abformpfosten 6 besteht im Wesentlichen aus einem Pfostenteil 61 und einer in dem Pfostenteil 61 verschiebbar gelagerten Schraube 62, wobei zwischen Pfostenteil 61 und Schraube 62 eine Schraubenfeder 63 angeordnet ist.

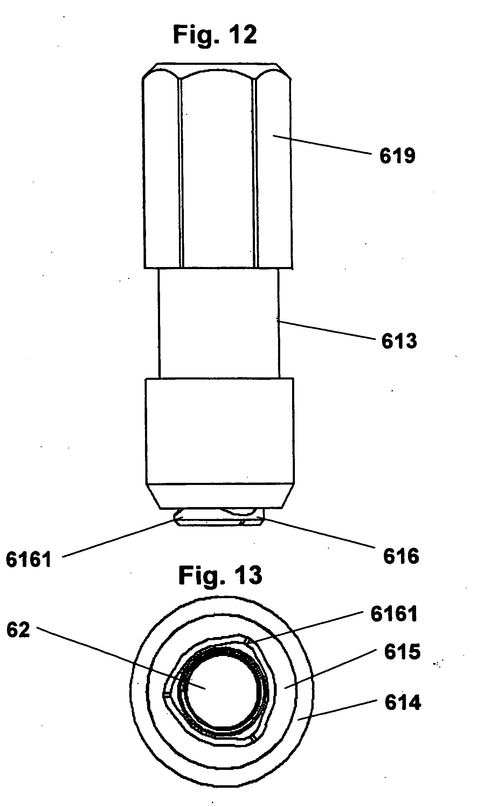

Das Pfostenteil 61 ist im Wesentlichen als Hohlzylinder ausgeführt. An seinem dem Implantat gegenüberliegenden oberen Ende ist innen umlaufend ein Innenkonus 611 sowie außen umlaufend ein Außenkonus 612 angeordnet. Etwa mittig ist in das Pfostenteil 61 außen eine umlaufende Nut 613 eingebracht. An seinem dem Implantat zugewandten Ende ist außen umlaufend ein Außenkonus 614 ausgebildet, der in einen an der Unterseite des Pfostenteils 61 angeordneten Innenkonus 615 mündet. Der Innenkonus 615 begrenzt umlaufend einen an das Pfostenteil 61 angeformten Außendreikant 616, der drei regelmäßig angeordnete Zähne 6161 aufweist. Im Ausführungsbeispiel ist der Außendreikant 616 wankelförmig ausgebildet (vgl. Figur 13).

Der Innenkonus 615 des Pfostenteils 61 ist derart ausgebildet, dass er eine größere Steigung aufweist, als der Außenkonus 22 des Anschlussstücks 2 des Implantats, sodass nach bestimmungsgemäßem Einschrauben der Schraube 62 in das Opfergewinde 32 des Implantats die Wand des Innenkonus 615 federnd nach außen gedrückt wird. Hierdurch ist eine Abdichtung zwischen Innenkonus 615 und Außenkonus 22 bewirkt.

Oberhalb des Außenkonus 614 ist in dem Pfostenteil 61 innen umlaufend eine Gewindesicherung 617 angeordnet. Oberhalb der außen umlaufenden Nut 613 ist innerhalb des Pfostenteils 61 ein Anschlag 618 für den Kopf 621 der Schraube 62 ausgebildet. Unterhalb des Außenkonus 612 ist an dem Pfostenteil 61 außen umlaufend ein Außenvielkant 619 angeformt.

Die Schraube 62 weist einen Schraubenkopf 621 auf, in den mittig eine Sackbohrung 622 eingebracht ist. Die Innenwand der Sackbohrung 622 ist mit einem Innenvielkant 623 versehen. Die nach außen gerichtete Oberseite des Innenvielkants 623 ist als Innenkonus 624 abgeschrägt ausgebildet. An den Schraubenkopf 621 ist ein Zylinderstück 625 angeformt, dessen Außendurchmesser geringer ist als der Außendurchmesser des Schraubenkopfes 621, sodass ein Absatz 626 gebildet ist. Weiterhin ist in Höhe des Innenvielkants 623 außen umlaufend ein Absatz 629 angeordnet. An seinem dem Absatz 626 gegenüberliegenden Ende ist an das Zylinderstück 625 ein Gewindezapfen 627 mit einem Außengewinde 628 angeformt.

Die Schraube 62 ist derart in dem Pfostenteil 61 geführt, dass der Schraubenkopf 621 in einer Endstellung mit dem Absatz 629 an dem Anschlag 618 des Pfostenteils 61 anliegt; in der anderen Endstellung liegt das Gewinde 628 des Gewindezapfens 627 an der Gewindesicherung 617 des Pfostenteils 61 an. Zwischen diesen Endstellungen ist die Schraube 62 in dem Pfostenteil 61 verschieblich gelagert. Zwischen dem Absatz 626 der Schraube 62 und der Gewindesicherung 617 des Pfostenteils 61 ist eine Schraubenfeder 63 angeordnet, durch welche das Zylinderstück 625 der Schraube 62 geführt ist.

## Patentansprüche

1. Zahnmedizinisches Implantat, umfassend einen zapfenförmigen Grundkörper zur Befestigung in einem Kieferknochen und ein Anschlussstück (2), wobei in das Implantat eine eine Innenwandung aufweisende Sackbohrung (3) eingebracht ist, **dadurch gekennzeichnet, dass** die Innenwandung der Sackbohrung (3) wenigstens zwei übereinander und beabstandet zueinander angeordnete Innengewinde (31, 32) aufweist.

2. Implantat nach Anspruch 1, **dadurch gekennzeichnet, dass** das untere, dem Grund der Sackbohrung (3) am nächsten angeordnete Innengewinde (31) einen kleineren Innendurchmesser aufweist, als das wenigstens eine darüber angeordnete Innengewinde (32).

3. Zahnmedizinisches Implantat nach Anspruch 1 oder 2, **dadurch gekennzeichnet, dass** an dem Anschlussstück (2) außen umlaufend ein Anschlusskonus (22) angeformt ist.

4. Implantat nach einem der vorgenannten Ansprüche, **dadurch gekennzeichnet, dass** das Anschlussstück (2) außen wenigstens eine umlaufende Nut (21) aufweist.

5. Implantataufbau, bestehend aus einem Implantat nach einem der Ansprüche 3 und 4 sowie einem mehrteiligen, eine integrierte, einen Gewindezapfen (41, 521, 627) aufweisende Schraube (52, 62) zum Einschrauben in ein Innengewinde (32) des Implantats umfassenden Einsatz (4, 5, 6), wobei der Einsatz (4, 5, 6) einen den Gewindezapfen (41, 521, 627) überragenden Absatz (43, 51, 61) aufweist, in dem ein Innenkonus (432, 514, 615) eingeformt ist, **dadurch gekennzeichnet, dass** der Innenkonus (432, 514, 615) des Einsatzes (4, 5, 6) derart ausgebildet ist, dass er eine größere Steigung aufweist, als der Anschlusskonus (22) des Implantats, sodass nach bestimmungsgemäßen Einschrauben des Gewindezapfens (41, 521, 627) des Einsatzes (4, 5, 6) in das Gewinde (32) des Implantats die Außenwände des Innenkonus (432, 514, 615) des Einsatzes (4, 5, 6) durch den Anschlusskonus (22) des Implantats federnd nach außen gedrückt werden, derart, dass eine Abdichtung zwischen Innenkonus (432, 514, 615) und Anschlusskonus (22) bewirkt ist.

6. Implantataufbau nach Anspruch 5, **dadurch gekennzeichnet, dass** der Innenkonus (432, 514, 615) des Einsatzes (4, 5, 6) derart ausgebildet ist, dass bei bestimmungsgemäßer Befestigung des Einsatzes (4, 5, 6) in dem Implantat am Übergang zwischen Einsatz (4, 5, 6) und Implantat eine umlaufende Kerbe (434, 516) gebildet ist, derart, dass ein Platform-Switching Effekt zur Verminderung des Knochenrückgangs im Übergangsbereich bewirkt ist.

## Claims

1. Dental implant, comprising a peg-shaped main member for fastening in a jaw bone and a connecting piece (2), where a blind hole (3) having an inner wall is made in the implant, **characterised in that** the inner wall of the blind hole (3) incorporates at least two internal screw threads (31, 32) disposed above one another and set a distance apart.

2. Implant in accordance with claim1, **characterised in that** the lower internal screw thread (31) disposed nearest to the blind hole (3) has a smaller inside diameter than the one or more internal screw threads (32) disposed above it.

3. Dental implant in accordance with claim 1 or 2, **characterised in that** a connecting taper (22) is formed on and all the way round the connecting piece (2).

4. Implant in accordance with any one of the foregoing claims, **characterised in that** the connecting piece (2) has one or more grooves (21) running all the way round it on the outside.

5. Implant structure, comprising an implant in accordance with claims 3 and 4 and a multipart insert member (4,5,6) comprising an integrated screw (52,62) having a threaded portion (41, 521,627) for screwing into an internal thread (32) of the implant, where the insert member (4,5,6) has a widened portion (43,51,61) projecting out over the threaded peg (41,521,627) in which an inside taper (432,514,615) is formed, **characterised in that** the inside taper (432,514,615) of the insert (4,5,6) is constructed so as to have a steeper pitch than the connecting taper (22) of the implant so that after the threaded peg (41,521) of the insert (4,5,6) is correctly screwed into the screw thread (32) of the implant the outer walls of the inner taper (432,514,615) of the insert (4,5,6) are pressed resiliently outwards by the connecting taper (22) of the implant in such a way that a seal is formed between the inside taper (432,514,615) and the connecting taper (22).

6. Implant structure in accordance with claim 5, **characterised in that** the inside taper (432,514,615) of the insert (4,5,6) is constructed so that, when the insert (4,5,6) is correctly fastened in the implant, a groove (434,516) running all the way round is formed at the point of transition between the insert (4,5,6) and the implant so that a platform switching effect to reduce bone recession in the area of transition area is produced.

## Revendications

1. Implant dentaire comprenant un corps de base en forme de fusée destiné à être fixé dans un os maxillaire, et une pièce de raccordement (2), sachant que dans l'implant a été ménagé un alésage borgne (3) présentant une paroi intérieure, **caractérisé en ce que** la paroi intérieure de l'alésage borgne (3) présente au moins deux taraudages (31, 32) superposés et agencés à une certaine distance l'un de l'autre.

2. Implant selon la revendication 1, **caractérisé en ce que** le taraudage inférieur (31) agencé le plus près du fond de l'alésage borgne (3) présente un diamètre intérieur inférieur à au moins celui du taraudage (32) situé au dessus.

3. Implant dentaire selon la revendication 1 ou 2, **caractérisé en ce que** contre la pièce de raccordement (2) a été modelé, périphériquement à l'extérieur, un cône de raccordement (22).

4. Implant selon l'une des revendications précédentes, **caractérisé en ce que** la pièce de raccordement (2) présente à l'extérieur au moins une rainure (21) périphérique.

5. Structure d'implant comprenant un implant selon l'une des revendications 3 et 4, ainsi qu'un insert (4, 5, 6) en plusieurs parties entourant une vis (52, 62) présentant une tige filetée intégrée (41, 521, 627) à visser dans un taraudage (32) de l'implant, sachant que l'insert (4, 5, 6) présente un épaulement (43,51,61) dépassant la tige filetée (41, 521, 627), épaulement dans lequel un cône intérieur (432, 514, 615) a été modelé, **caractérisée en ce que** le cône intérieur (432, 514, 615) de l'insert (4, 5, 6) a été configuré de sorte à présenter un pas plus important que le cône de raccordement (22) de l'implant, de sorte qu'après vissage de la tige filetée (41, 521, 627) de l'insert (4, 5, 6) dans le taraudage (32) de l'implant, les parois extérieures du cône intérieur (432, 514, 615) de l'insert (4, 5, 6) sont poussées élastiquement vers l'extérieur par le cône de raccordement (22) de l'implant, de sorte à provoquer une étanchéisation entre le cône intérieur (432, 514, 615) et le cône de raccordement (22).

6. Structure d'implant selon la revendication 5, **caractérisée en ce que** le cône intérieur (432, 514, 615) de l'insert (4, 5, 6) est configuré de telle sorte que, lorsque l'insert (4, 5, 6) a été fixé conformément à sa destination, une rainure périmétrique (434, 516) se forme dans l'implant dans la zone de transition entre l'insert (4, 5, 6) et l'implant, de sorte à provoquer un effet de platform-switsching réduisant la régression osseuse dans la zone de transition.
